# EUROPEAN PATENT SPECIFICATION

(11) **EP 3 941 193 B1**
(45) Date of publication and mention of the grant of the patent: **07.05.2025**
(21) Application number: 20713998.1
(22) Date of filing: 16.03.2020
(51) Int. Cl.: A01K 7/02, A01K 39/02

(54) **A DRINKING SYSTEM**
TRÄNKSYSTEM
SYSTÈME D'ABREUVAGE

(30) Priority: 18.03.2019 NL 2022754
(43) Date of publication of application: 26.01.2022
(73) Proprietor: Kanters Special Products B.V., 5737 RV Lieshout (NL)
(72) Inventor: VEREIJKEN, Tommy Antonius Laurentius Henricus, 5737 RV LIESHOUT (NL)
(74) Representative: Algemeen Octrooi- en Merkenbureau B.V.
(86) International application number: PCT/NL2020/050171
(87) International publication number: WO 2020/190130

(56) References cited:
- US-A- 5 143 257
- US-A1- 2005 229 859

## Description

The invention relates to a drinking system for example for livestock comprising a dosing system for dosing of at least one additive. The invention further relates to the use of such a drinking system. The invention also relates to a method for improving a drinking system for example for livestock comprising a dosing system.

Drinking systems for livestock comprising a dosing system are known. In of the dosing system at least one additive such as for example a medicine can be dosed by means of a metering pump. A drawback of the known drinking systems is that the pressure in the drinking system is not constant, as a result it is difficult or even impossible for the metering pump to dose the additive in a correct or desired amount and/or in a constant manner in a liquid to provide a solution for drinking. As a result the livestock does not receive the desired composition of the solution such that the desired effects of the additive in the solution cannot be achieved or at least not the desired extent. US5143257 discloses a system including a pump for injecting medication and/or nutrients into a main flow of drinking water. A pressure sensing device connected to the main water flow emits a signal indicative of pressure changes thereat while a water meter emits a signal indicative of flow rate of the main water flow, wherein the combined signals through associated electronics regulate operation of the pump to controllably maintain a desired mixing ratio.

It is an object of the invention to provide an improved drinking system. This object is achieved by a drinking system according to claim 1.

The drinking system for example for livestock comprises a dosing system for dosing of at least one additive into a pressurized fluid line, for example a line of a tap water network. The pressurized fluid line is for example a conduit for transporting drinking liquid. The dosing system comprises a metering pump configured to be connected to an additive supply line, a back pressure regulator having an outlet arranged to be connected to the pressurized fluid line, and a connecting line connecting an outlet of the metering pump with an inlet of the back pressure regulator. The back pressure regulator is configured to provide a connecting line pressure in the connecting line which is higher than the fluid line pressure in the pressurized fluid line.

By integrating a back pressure regulator in the dosing system it is possible to maintain a constant pressure upstream of the back pressure regulator, i.e. a constant upstream pressure in the connecting line connecting the outlet of the metering pump with the inlet of the back pressure regulator. In this way the metering pump is able to provide a constant and relatively accurate dosage of additive per volume unit of the fluid transported by the pressurized fluid line to its destination.

The metering pump, a solenoid-driven metering pump pumps the additive under counterpressure in a pressurized fluid line for example a water tap line. The fluid pressure in the pressurized fluid line varies in practice for example as a result of changing drinking consumption. This variable fluid pressure in the pressurized fluid line normally results in an undesired fluctuation in the amount of the additive supplied by the metering pump into the pressurized fluid line. As a result the drinking fluid after injection of the additive(s) in the pressurized fluid line does not have the desired or predetermined composition such that the desired effects in the animal(s) of the additive(s) cannot be achieved or at least not the desired extent. By installing a back pressure regulator it is possible to provide a constant or non-varying upstream pressure of, for example greater than 5 bar such as 6-9 bar, such that the pump is able to deliver a constant release of additive(s). By providing a pressure in the connecting line which is higher than the pressure in the pressurized fluid line, for example higher than the maximum pressure in the pressurized fluid line, the metering pump is able to function independently of the fluid pressure in the pressurized fluid line. The pressure in the pressurized fluid line is for example 1-5 bar.

By means of the above described drinking system it is possible to prepare a desired drinking solution for livestock. By means of the drinking system sick animals can easily be treated by additives such as liquid nutritional supplements or medicines via their drinking water. Disease often results in a reduced feed intake, while the water intake is maintained, such that the drinking system disclosed herein can be used to treat the animals effectively. One single drink system can be used for example for a caddle shed or different drinking systems can be used for different sections of the caddle shed, wherein each section may receive its own drinking solution tuned for the animal or animals in that section.

In one aspect, the dosing system further comprises a flow detector for detecting a flow of fluid in the pressurized fluid line, wherein the detector is configured to activate the metering pump if fluid flow in the pressurized fluid line is detected and/or to deactivate the metering pump if no or substantially no fluid flow in the pressurized fluid line is detected. The flow detector may comprise a flow meter, for example a water meter which is connected to the metering pump by a reed switch.

The dosing system further comprises an injection valve configured for injecting the additive(s) in the fluid flowing in the pressurized fluid line. The back pressure regulator outlet is arranged to be connected to the pressurized fluid line via the injection valve. The back pressure regulator outlet and the injection valve may be incorporated in a single unit. By using an injection valve it is possible to facilitate and/or improve the additive injection process into the pressurized fluid line.

The dosing system may further comprise a fluid line section to be connected to the pressurized fluid line. To facilitate and accelerate the installation process, the fluid line section may comprise connectors provided on its inlet and outlet ends for connecting the fluid line section in a fluid connection with the pressurized fluid line. The dosing system may also have a mounting apparatus having a mounting mechanism for mounting the dosing system to an object, for example a wall, wherein the mounting apparatus further comprises a support plate for carrying the metering pump and the back pressure regulator. It is also possible that the support plate carries the fluid line section mentioned above, such that the mounting apparatus carrying the above components can be easily installed to provide an improved drinking system in a relatively quick manner.

In a different aspect, the drinking system comprises a nutritional supplement tank having an outlet connected to an additive supply line for providing a fluid connection between the nutritional supplement tank and the metering pump of the dosing system.

It is also an object of the invention to use the above described improved drinking system. In particular, if the pressurized fluid line is a line of a tap water network and/or the at least one additive comprises a nutritional supplement, for example a liquid nutritional supplement. Nutritional supplements such as minerals and vitamins can be used in water for the animals as preventative measures against diseases in the livestock. Further, liquid nutritional supplements may also be used in acute cases to treat sick animals or less strong animals.

It is a further object of the invention to provide a method for improving a drinking system for example for livestock. This object is achieved according to claim 12 by incorporating a dosing system as required in claim 1 in the drinking system as described in detail in this disclosure. By means of this method it is possible to update/adjust existing drinking systems to an improved drinking system.

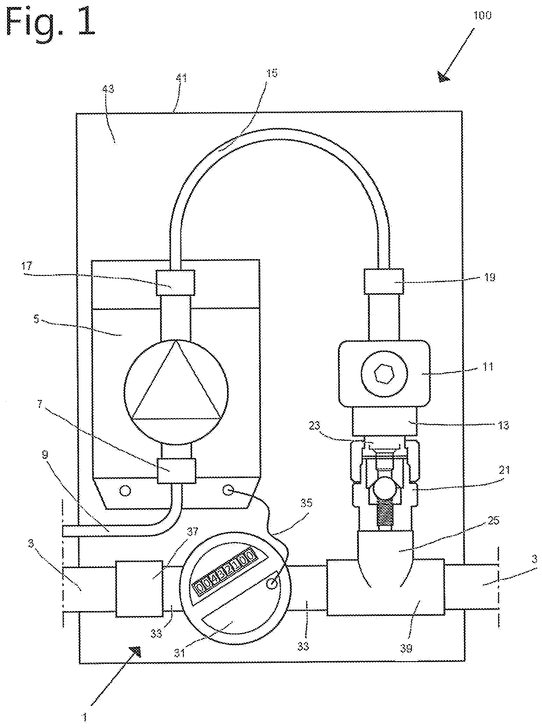

The present invention will be explained in more detail below with reference to the appended figure 1 showing an exemplary embodiment of the drinking system.

Each feature disclosed with reference to the figure can also be combined with another feature disclosed in this disclosure, unless it is evident for a person skilled in the art that these features are incompatible.

Figure 1 shows a drinking system 100 for example for livestock or at least a portion of the drinking system 100. The drinking system 100 comprises a dosing system 1 for dosing of at least one additive into a conduit/line 3. The line 3 transports a liquid comprising water. The dosing system 1 further comprises a metering pump 5 having an inlet 7 connected to an additive supply line 7, a back pressure regulator 11 having an outlet 13 arranged to be connected to line 3, and a connecting line 15 connecting an outlet 17 of the metering pump 5 with an inlet 19 of the back pressure regulator 11.

A back pressure regulator 11 is a device configured to maintain a defined pressure upstream of itself (at its own inlet 19).

In the exemplary embodiment shown in figure 1 the dosing system 1 further comprises an injection valve 21 configured for injecting the additive(s) in the liquid flowing in the line 3. The inlet 23 of the injection valve 21 is directly connected to the outlet 13 of the back pressure regulator 11, wherein the outlet 25 of the injection valve 21 is directly connected to line 3. In other words, the back pressure regulator outlet 13 is connected to the pressurized fluid line 3 via the injection valve 21.

The dosing system 1 further comprises a flow detector 31 for detecting a flow in the line 3, wherein the detector 31 is configured to activate the metering pump 5 if flow in the line 3 is detected and/or to deactivate the metering pump if no or substantially no flow in the line 3 is detected. The flow detector 31 comprises a flow meter, for example a water meter. The flow detector 31 is connected to the metering pump 5 by a reed switch 35. The metering pump 5 is a solenoid-driven metering pump. A solenoid-driven metering pump has excellent continuous running characteristics and a drive which is virtually wear-free. In addition, such a pump further requires no lubricated bearings or shafts such that the maintenance and repair costs are very low.

The dosing system 1 further comprises a fluid line section 33 to be connected to the line 3 by connectors 37, 39 provided on its inlet and outlet ends for connecting the fluid line section 33 in a fluid connection with the line 3. Connector 39 is a three way connector connected to the line 3, the fluid line section 33 and the injection valve 21.

The dosing system 1 also comprises a mounting apparatus 41 having a mounting mechanism (not shown) for mounting the dosing system 1 to an object, for example a wall (not shown), wherein the mounting apparatus 41 further comprises a support plate 43 carrying the metering pump 5, the back pressure regulator 11, the injection valve 21, the fluid line section 33 and the flow detector 31.

The drinking system 100 comprises a nutritional supplement tank (not shown) having an outlet connected to an additive supply line 9 for providing a fluid connection between the nutritional supplement tank and the metering pump 15 of the dosing system 1.

By installing a back pressure regulator 11 it is possible to provide a constant or non-varying upstream pressure of, for example greater than 5 bar, such that the pump 5 is able to deliver a constant release of additive(s). In the drinking system 100, the back pressure regulator 11 is configured to provide a connecting line pressure in the connecting line 15 which is higher than the fluid line pressure in the line 3. By providing a pressure in the connecting line which is higher than the pressure in the pressurized fluid line, for example higher than the maximum pressure in the line 3 under normal operating conditions, the metering pump 5 is able to function independently of the pressure of the liquid in the line 3. The pressure in the line 3 is for example 1-5 bar.

The additive is a substance added to the fluid in relatively small amounts, wherein the substance may be a nutritional supplement, for example a liquid nutritional supplement, to be added into a liquid for drinking, for example tap water, flowing in line 3.

## Claims

1. A drinking system (100) for example for livestock comprising a pressurized fluid line, for example a line of a tap water network, a dosing system (1) for dosing of at least one additive into the pressurized fluid line (3, wherein the dosing system comprises a solenoid-driven metering pump (5) having an inlet (7) connected to an additive supply line (9), wherein the drinking system further comprises a back pressure regulator (11) having an outlet (13) connected to the pressurized fluid line (3), and a connecting line (15) connecting an outlet (17) of the metering pump with an inlet (19) of the back pressure regulator, wherein the back pressure regulator is configured to provide a connecting line pressure in the connecting line which is higher than the fluid line pressure in the pressurized fluid line to provide a constant pressure upstream of the back pressure regulator, such that the metering pump is able to function independently of the fluid pressure in the pressurized fluid line, wherein the dosing system further comprises an injection valve (21) configured for injecting the additive(s) in the fluid flowing in the pressurized fluid line, wherein the back pressure regulator outlet is connected to the pressurized fluid line via the injection valve.

2. The drinking system (100) according to claim 1, wherein the dosing system further comprises a flow detector (31) for detecting a flow of fluid in the pressurized fluid line, wherein the detector is configured to activate the metering pump if fluid flow in the pressurized fluid line is detected and/or to deactivate the metering pump if no or substantially no fluid flow in the pressurized fluid line is detected.

3. The drinking system (100) according to claim 2, wherein the flow detector comprises a flow meter, preferable the flow meter is a water meter which is connected to the metering pump by a reed switch (35).

4. The drinking system (100) according to any of the previous claims, wherein the dosing system further comprises a fluid line section (33) to be connected to the pressurized fluid line.

5. The drinking system (100) according to claim 4, wherein the fluid line section comprises connectors (37, 39) provided on its inlet and outlet ends for connecting the fluid line section in a fluid connection with the pressurized fluid line.

6. The drinking system (100) according to any of the previous claims, wherein the dosing system comprises a mounting apparatus (41) having a mounting mechanism for mounting the dosing system to an object, for example a wall, wherein the mounting apparatus further comprises a support plate (43) for carrying the metering pump and the back pressure regulator.

7. The drinking system (100) according to any of the previous claims, wherein the drinking system comprises the pressurized fluid line which is part of a tap water network.

8. The drinking system (100) according to any of the previous claims, wherein the drinking system comprises a nutritional supplement tank having an outlet connected to the additive supply line for providing a fluid connection between the nutritional supplement tank and the metering pump of the dosing system.

9. Use of a drinking system (100) according to any of the previous claims.

10. Use of a drinking system (100) according to claim 9, wherein the pressurized fluid line is a line in a tap water network.

11. Use of a drinking system (100) according to claim 10, wherein the at least one additive comprises a nutritional supplement, for example a liquid nutritional supplement.

12. Method for improving a drinking system (100) comprising a pressurized fluid line (3), for example for livestock, by incorporating a dosing system (1) for dosing of at least one additive into said pressurized fluid line (3), for example a line of a tap water network, wherein the dosing system comprises a solenoid-driven metering pump (5) having an inlet (7) connected to an additive supply line (9), wherein the drinking system further comprises a back pressure regulator (11) having an outlet (13) connected to the pressurized fluid line, and a connecting line (15) connecting an outlet (17) of the metering pump with an inlet (19) of the back pressure regulator, wherein the back pressure regulator is configured to provide a connecting line pressure in the connecting line which is higher than the fluid line pressure in the pressurized fluid line to provide a constant pressure upstream of the back pressure regulator, such that the metering pump is able to function independently of the fluid pressure in the pressurized fluid line, wherein the dosing system further comprises an injection valve (21) configured for injecting the additive(s) in the fluid flowing in the pressurized fluid line, wherein the back pressure regulator outlet is connected to the pressurized fluid line via the injection valve.

## Patentansprüche

1. Trinksystem (100) zum Beispiel für Nutztiere, umfassend eine Druckfluidleitung, zum Beispiel eine Leitung eines Leitungswassernetzes, ein Dosiersystem (1) zum Dosieren mindestens eines Additivs in die Druckfluidleitung (3), wobei das Dosiersystem eine elektromagnetisch angetriebene Dosierpumpe (5) umfasst, die einen Einlass (7) aufweist, der mit einer Additivzufuhrleitung (9) verbunden ist, wobei das Trinksystem ferner einen Gegendruckregler (11) mit einem Auslass (13), der mit der Druckfluidleitung (3) verbunden ist, und eine Verbindungsleitung (15) umfasst, die einen Auslass (17) der Dosierpumpe mit einem Einlass (19) des Gegendruckreglers verbindet, wobei der Gegendruckregler dazu ausgestaltet ist, einen Verbindungsleitungsdruck in der Verbindungsleitung bereitzustellen, der höher als der Fluidleitungsdruck in der Druckfluidleitung ist, um einen konstanten Druck stromaufwärts des Gegendruckreglers bereitzustellen, so dass die Dosierpumpe in der Lage ist, unabhängig von dem Fluiddruck in der Druckfluidleitung zu arbeiten, wobei das Dosiersystem ferner ein Einspritzventil (21) umfasst, das zum Einspritzen des oder der Additivs/e in das in der Druckfluidleitung strömende Fluid ausgestaltet ist, wobei der Gegendruckreglerauslass über das Einspritzventil mit der Druckfluidleitung verbunden ist.

2. Trinksystem (100) nach Anspruch 1, wobei das Dosiersystem ferner einen Durchflussdetektor (31) zum Detektieren eines Fluidstroms in der Druckfluidleitung umfasst, wobei der Detektor dazu ausgestaltet ist, die Dosierpumpe zu aktivieren, wenn ein Fluidstrom in der Druckfluidleitung detektiert wird, und/oder die Dosierpumpe zu deaktivieren, wenn kein oder im Wesentlichen kein Fluidstrom in der Druckfluidleitung detektiert wird.

3. Trinksystem (100) nach Anspruch 2, wobei der Durchflussdetektor einen Durchflussmesser umfasst, vorzugsweise wobei der Durchflussmesser ein Wassermesser ist, der durch einen Reed-Schalter (35) mit der Dosierpumpe verbunden ist.

4. Trinksystem (100) nach einem der vorhergehenden Ansprüche, wobei das Dosiersystem ferner einen Fluidleitungsabschnitt (33) umfasst, der mit der Druckfluidleitung zu verbinden ist.

5. Trinksystem (100) nach Anspruch 4, wobei der Fluidleitungsabschnitt Verbinder (37, 39) umfasst, die an seinen Einlass- und Auslassenden zum Verbinden des Fluidleitungsabschnitts in einer Fluidverbindung mit der Druckfluidleitung vorgesehen sind.

6. Trinksystem (100) nach einem der vorhergehenden Ansprüche, wobei das Dosiersystem eine Montagevorrichtung (41) mit einem Montagemechanismus zum Montieren des Dosiersystems an einem Objekt, beispielsweise einer Wand, umfasst, wobei die Montagevorrichtung ferner eine Stützplatte (43) zum Tragen der Dosierpumpe und des Gegendruckreglers umfasst.

7. Trinksystem (100) nach einem der vorhergehenden Ansprüche, wobei das Trinksystem die Druckfluidleitung umfasst, die Teil eines Leitungswassernetzes ist.

8. Trinksystem (100) nach einem der vorhergehenden Ansprüche, wobei das Trinksystem einen Nahrungsergänzungsmitteltank umfasst, der einen Auslass aufweist, der mit der Additivzufuhrleitung verbunden ist, um eine Fluidverbindung zwischen dem Nahrungsergänzungsmitteltank und der Dosierpumpe des Dosiersystems bereitzustellen.

9. Verwendung eines Trinksystems (100) nach einem der vorhergehenden Ansprüche.

10. Verwendung eines Trinksystems (100) nach Anspruch 9, wobei die Druckfluidleitung eine Leitung in einem Leitungswassernetz ist.

11. Verwendung eines Trinksystems (100) nach Anspruch 10, wobei das mindestens eine Additiv ein Nahrungsergänzungsmittel, zum Beispiel ein flüssiges Nahrungsergänzungsmittel, umfasst.

12. Verfahren zur Verbesserung eines eine Druckfluidleitung (3) umfassenden Trinksystems (100) beispielsweise für Nutztiere, durch Eingliederung eines Dosiersystems (1) zum Dosieren mindestens eines Additivs in die Druckfluidleitung (3), zum Beispiel eine Leitung eines Leitungswassernetzes, wobei das Dosiersystem eine elektromagnetisch angetriebene Dosierpumpe (5) umfasst, die einen Einlass (7) aufweist, der mit einer Additivzufuhrleitung (9) verbunden ist, wobei das Trinksystem ferner einen Gegendruckregler (11) mit einem Auslass (13), der mit der Druckfluidleitung verbunden ist, und eine Verbindungsleitung (15) umfasst, die einen Auslass (17) der Dosierpumpe mit einem Einlass (19) des Gegendruckreglers verbindet, wobei der Gegendruckregler dazu ausgestaltet ist, einen Verbindungsleitungsdruck in der Verbindungsleitung bereitzustellen, der höher als der Fluidleitungsdruck in der Druckfluidleitung ist, um einen konstanten Druck stromaufwärts des Gegendruckreglers bereitzustellen, so dass die Dosierpumpe in der Lage ist, unabhängig von dem Fluiddruck in der Druckfluidleitung zu arbeiten, wobei das Dosiersystem ferner ein Einspritzventil (21) umfasst, das zum Einspritzen des oder der Additivs/e in das in der Druckfluidleitung strömende Fluid ausgestaltet ist, wobei der Gegendruckreglerauslass über das Einspritzventil mit der Druckfluidleitung verbunden ist.

## Revendications

1. Système d'abreuvement (100) par exemple pour bétail comprenant une conduite de fluide sous pression, par exemple une conduite d'un réseau de distribution d'eau, un système de dosage (1) pour le dosage d'au moins un additif dans la conduite de fluide sous pression (3), dans lequel le système de dosage comprend une pompe doseuse entraînée par solénoïde (5) ayant une entrée (7) reliée à une conduite d'alimentation en additif (9), dans lequel le système d'abreuvement comprend en outre un régulateur de contre-pression (11) ayant une sortie (13) reliée à la conduite de fluide sous pression (3), et une conduite de raccordement (15) reliant une sortie (17) de la pompe doseuse à une entrée (19) du régulateur de contre-pression, dans lequel le régulateur de contre-pression est configuré pour fournir une pression de conduite de raccordement dans la conduite de raccordement qui est supérieure à la pression de conduite de fluide dans la conduite de fluide sous pression pour fournir une pression constante en amont du régulateur de contre-pression, de sorte que la pompe doseuse soit capable de fonctionner indépendamment de la pression de fluide dans la conduite de fluide sous pression, dans lequel le système de dosage comprend en outre une vanne d'injection (21) configurée pour injecter le ou les additif(s) dans le fluide s'écoulant dans la conduite de fluide sous pression, dans lequel la sortie du régulateur de contre-pression est reliée à la conduite de fluide sous pression par l'intermédiaire de la vanne d'injection.

2. Système d'abreuvement (100) selon la revendication 1, dans lequel le système de dosage comprend en outre un détecteur de débit (31) pour détecter un débit de fluide dans la conduite de fluide sous pression, dans lequel le détecteur est configuré pour activer la pompe doseuse si un débit de fluide dans la conduite de fluide sous pression est détecté et/ou pour désactiver la pompe doseuse si aucun débit de fluide ou pratiquement aucun débit de fluide dans la conduite de fluide sous pression n'est détecté.

3. Système d'abreuvement (100) selon la revendication 2, dans lequel le détecteur de débit comprend un débitmètre, de préférence le débitmètre est un compteur d'eau qui est relié à la pompe doseuse par un commutateur à lames (35).

4. Système d'abreuvement (100) selon l'une des revendications précédentes, dans lequel le système de dosage comprend en outre une section de conduite de fluide (33) à relier à la conduite de fluide sous pression.

5. Système d'abreuvement (100) selon la revendication 4, dans lequel la section de conduite de fluide comprend des raccords (37, 39) prévus sur ses extrémités d'entrée et de sortie pour relier la section de conduite de fluide en liaison fluidique avec la conduite de fluide sous pression.

6. Système d'abreuvement (100) selon l'une des revendications précédentes, dans lequel le système de dosage comprend un appareil de montage (41) ayant un mécanisme de montage pour monter le système de dosage sur un objet, par exemple un mur, dans lequel l'appareil de montage comprend en outre une plaque de support (43) pour porter la pompe doseuse et le régulateur de contre-pression.

7. Système d'abreuvement (100) selon l'une des revendications précédentes, dans lequel le système d'abreuvement comprend la conduite de fluide sous pression qui fait partie d'un réseau de distribution d'eau.

8. Système d'abreuvement (100) selon l'une des revendications précédentes, dans lequel le système d'abreuvement comprend un réservoir de complément nutritionnel ayant une sortie reliée à la conduite d'alimentation en additif pour assurer une liaison fluidique entre le réservoir de complément nutritionnel et la pompe doseuse du système de dosage.

9. Utilisation d'un système d'abreuvement (100) selon l'une des revendications précédentes.

10. Utilisation d'un système d'abreuvement (100) selon la revendication 9, dans laquelle la conduite de fluide sous pression est une conduite dans un réseau de distribution d'eau.

11. Utilisation d'un système d'abreuvement (100) selon la revendication 10, dans laquelle l'au moins un additif comprend un complément nutritionnel, par exemple un complément nutritionnel liquide.

12. Procédé d'amélioration d'un système d'abreuvement (100) comprenant une conduite de fluide sous pression (3), par exemple pour bétail, par incorporation d'un système de dosage (1) pour le dosage d'au moins un additif dans ladite conduite de fluide sous pression (3), par exemple une conduite d'un réseau de distribution d'eau, dans lequel le système de dosage comprend une pompe doseuse entrainée par solénoïde (5) ayant une entrée (7) reliée à une conduite d'alimentation en additif (9), dans lequel le système d'abreuvement comprend en outre un régulateur de contre-pression (11) ayant une sortie (13) reliée à la conduite de fluide sous pression, et une conduite de raccordement (15) reliant une sortie (17) de la pompe doseuse à une entrée (19) du régulateur de contre-pression, dans lequel le régulateur de contre-pression est configuré pour fournir une pression de conduite de raccordement dans la conduite de raccordement qui est supérieure à la pression de conduite de fluide dans la conduite de fluide sous pression pour fournir une pression constante en amont du régulateur de contre-pression, de sorte que la pompe doseuse soit capable de fonctionner indépendamment de la pression de fluide dans la conduite de fluide sous pression, dans lequel le système de dosage comprend en outre une vanne d'injection (21) configurée pour injecter le ou les additif(s) dans le fluide s'écoulant dans la conduite de fluide sous pression, dans lequel la sortie du régulateur de contre-pression est reliée à la conduite de fluide sous pression par l'intermédiaire de la vanne d'injection.
